# EUROPEAN PATENT APPLICATION

(11) **EP 4 365 849 A1**
(43) Date of publication of application: **08.05.2024**
(21) Application number: 22205361.3
(22) Date of filing: 03.11.2022
(51) Int. Cl.: G06T 15/40

(54) **AUGMENTED REALITY DEVICES**

(71) Applicant: Koninklijke Philips N.V., 5656 AG Eindhoven (NL)
(72) Inventor: VAREKAMP, Christiaan, Eindhoven (NL); OOMEN, Arnoldus Werner Johannes, Eindhoven (NL)
(74) Representative: Philips Intellectual Property & Standards

(57) **Abstract**

A method is provided of processing an image of a scene captured by a camera of an augmented reality device. An occluded real-world object and an occluding real-world object are identified in the scene, wherein at least a region of the occluded object is occluded by the occluding object. A representation of the occluded object including the region that is occluded by the occluding object is rendered, by using information additional to the image data from which the appearance of the region of the occluded object is derived. A representation of the occluding object is rendered with at least semitransparency at least at a portion where it covers the region of the occluded object.

## Description

### FIELD OF THE INVENTION

The invention relates to the field of augmented reality capable devices.

### BACKGROUND OF THE INVENTION

Virtual or augmented or mixed reality is typically implemented by headsets incorporating a screen for each eye. The headset is worn by a user to provide an immersive experience.

There are various types of headsets. Virtual reality only headsets require the user to take the headset off to view the real-world, pass-through mixed reality headsets have integrated cameras which allow access to the real visual world. See through augmented reality headsets are, for example, semi-transparent and always allow light from the real-world through to the user's eyes.

An augmented reality function may also be implemented by a hand-held device with a screen and a camera. The user holds the device in front of them, and simultaneously has a view of the real-world, and an enhanced image of the same real-world scene generated as an augmented image of the same real world scene.

This invention relates to use cases in which the purpose is to augment a view of the real-world rather than present an entirely virtual-world to the user. In such cases, the screen displays the image captured by the camera, and it is the same scene as the real-world scene viewed by the user.

For the purposes of this description, such devices will be termed "augmented reality" devices.

The displayed image on the screen of an augmented reality device is enhanced to provide additional information or functionality. For example, the user holds the device, points the camera to a real-world scene or object, and then visualizes the real-world scene or object through the display while additionally obtaining additional feedback in the form of annotated content or spoken instructions.

This additional content may for example provide additional information of interest to a tourist (e.g. information about the buildings in the displayed image), or provide maintenance or repair guidance, or provide cooking instructions. Generally, any additional information of interest can be overlaid onto the image of the scene, which is the real scene in front of the camera, to enhance the enjoyment of the user, or assist the user in performing tasks involving objects present in the scene.

When providing instructions or assistance to a user in respect of objects in the scene, it is important that the object is clearly visible, and in many cases this is needed even while the user physically interacts with the object, e.g. while they are performing a maintenance or repair operation or following cooking instructions, for the examples above. One particular issue is that objects in the scene may become occluded by the user's hand, parts of the object, other objects or tools being used by the user.

It is known to address the issue of occlusion between real and virtual objects in a user's view, for example so that an image of a real user's hand gripping a virtual object is correctly rendered. For example, how to achieve partial occlusion is described in the paper "GrabAR: Occlusion-aware Grabbing Virtual Objects in AR, Xiao Tang et. al., arXiv: 1912.100637v3 23 June 2020.

The rendering to achieve partial occlusion is made possible using a 3D model of the virtual object. However, dealing with occlusion for images of real objects (e.g. an image of a real hand occluding an image of a real object) is more difficult.

There is therefore a need to enable occlusion in augmented reality to be resolved, for images of real occluding and occluded objects.

### SUMMARY OF THE INVENTION

The invention is defined by the claims.

According to examples in accordance with an aspect of the invention, there is provided a method of processing an image of a scene captured by a camera of an augmented reality device, the image comprising image data for real world objects in the scene, the method comprising:
identifying an occluding object in the scene and an occluded object in the scene, wherein at least a region of the occluded object is occluded by the occluding object;
rendering a representation of the occluded object including the region that is occluded by the occluding object, by using information additional to the image data of the currently processed image from which the appearance of the region of the occluded object is derived; and
rendering a representation of the occluding object with at least semi-transparency at least at a portion where it occludes the region of the occluded object.

This method enables a complete image of an occluded object to be rendered by using the captured image data as well as additional information about the occluded object. The occluding object can then be rendered, with semi-transparency so that the underlying occluded object can be viewed. The method enables representations of real occluded objects to be rendered, and which are occluded by real occluding objects. This enables the user to have a better view of an object of interest even if it is occluded by another object (e.g. the user's hand).

The occluding object and the occluded object are for example identified by segmentation algorithms applied to the image data, and preferably also using depth data.

In a most basic implementation, depth data may be derived from the image data, whereas in preferred implementations a depth senor or similar depth input is used. Thus, preferably identifying an occluded object in the scene and an occluding object in the scene makes use of depth data, whether received separately from the image data or derived from the image data.

A basic form of depth data may be derived from the image data via temporal covering/uncovering (i.e., occlusion/de-occlusion) analysis. For that approach, typically a motion estimator with occlusion detection is used. Also, object class instance segmentation may be used (e.g. recognizing a full hand but partly covered tool).

Rendering a representation of the occluding object with at least semi-transparency is for example performed locally in a portion of the occluding object which is occluding the region of the occluded object.

For example, a semi-transparent hole may be rendered in the occluding object. This relieves the segmentation algorithm (for the occluding object) from the task of performing an accurate segmentation or performing a segmentation for the entire extent of the covered object.

The additional information for example comprises historical image data, and optionally stored information for an identified occluded object.

The additional information may be obtained from previous image data, or by identifying the object from a non-occluded part of the object which is visible in the image data, and then extrapolating the image of the occluded object.

The occluding object for example comprises a hand or a tool.

Thus, the user may cover an area of interest (of the occluded object) with a hand or tool, but the method enables the hand or tool (or a portion thereof) to be rendered as semi-transparent so that the occluded object of interest is still visible.

The occluding object may comprise a tool and the method comprises detecting and tracking a tip of the tool. As an example, the screwdriver tip will stop at the screw head, and once that location is known (in 3D), the semi-transparency can be maintained exactly over the screw head, which is the part of the occluded object which is of interest to the user.

Due to interaction, the occluding object (hand or tool) will also modify the pose of the occluded object. For instance, a screwdriver will turn a screw. The image data (and preferably also depth data) may be used to estimate the pose of the screwdriver. A known marker on the screwdriver can be used to estimate the pose. From the pose and the dimensions of the screwdriver the pose of the screw can be determined. Thus, a representation of the screw in the correct orientation can be rendered (making it easier to align the screwdriver with the screw).

Identifying the occluding object and the occluded object may be performed using the image data and depth map data. The depth map data assists the segmentation of the objects as well as enabling occlusion to be determined (i.e. knowing the depth order of segmented objects).

The method may comprise:
storing the image data and the depth map data over time as frames;
generating a mask identifying the location in the image of the occluding object over time; and
using the depth map data to identify times a selected pixel within the mask was occluding the occluded object.

This enables frames to be identified where a currently occluded pixel for which the same part of the occluded object was not occluded. These frames can then be used to reconstruct the whole or part of the appearance of the occluded object.

The method may further comprise:
determining a pixel color for the selected pixel and for the occluded object from a previous frame before the selected pixel was occluded;
applying the pixel color to the selected pixel of the current frame.

In this way, historical image data and depth map data is used to identify the pixel color of the occluded object underneath the occluding object. This may be applied to all pixels within the mask, i.e. all pixels which make up the occluding object (e.g. pixels within a hand shape).

The method may further comprise:
tracking a position and orientation of the camera overtime; and
translating the position of the determined pixel color to the current frame using the tracking information.

The camera may move over time, if it is part of a hand-held device (e.g. a smart phone). Thus, when looking under a selected pixel of the mask (e.g. the hand shape), a mapping is needed from the previous frame from which the non-occluded pixel color is obtained to the current frame (i.e. mapping the physical location of the occluded object from the previous frame to the current frame).

The method may further comprise:
using the depth map data and image data to identify a non-occluded portion of the occluded object;
estimating a geometry of the occluded object from the non-occluded portion;
obtaining image data of the complete occluded object from a previous frame or frames;
estimating a pose change of the occluded object between the previous frame or frames and the current frame; and
applying the pose change to the image data of the complete occluded object and render the complete occluded object in the current frame.

This method reconstructs the occluded object by identifying a non-occluded portion of it, obtaining image data for the occluded parts from previous image data, and then determining how the pose of the occluded object has changed. This is of interest for occluded objects which may move relative to other objects in the scene, for example because a product is being assembled or another function is being carried out.

This may be combined with the pixel mapping outlined above, so that movements of the camera are compensated as well as movements of the occluded object, when using image data from previous frames.

The method may further comprise detecting a touch event and rendering an indication of the touch event. This touch detection function can apply both the non-occluded part of an object and to the occluded part of an object.

For this purpose, the method may comprise generating a mask identifying the location in the image of the occluding object over time and determining a touch event by comparing locally depth values inside and outside the mask to determine if a depth difference is below a threshold.

The method may comprise:
identifying a set of parts in the image data, to be assembled; and
rendering a representation which illustrates associations between the parts based on an assembly manual. The associations may represent an assembly order and/or a representation of how to assemble the parts.

The invention also provides a computer program comprising computer program code which is adapted, when said program is run on a computer, to implement the method defined above.

The invention also provides an augmented reality device comprising:
a camera for capturing images of a scene;
a display; and
a processor for processing captured images and for rendering an image on the display,
wherein the processor is configured to implement the method defined above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows a method of processing an image for an augmented reality application;
Fig. 2 shows a first example of the method in more detail;
Fig. 3 shows a second example of the method in more detail;
Fig. 4 shows how non-occluded image data may be used to extrapolate from partially occluded image detail;
Fig. 5 shows an augmented reality system; and
Fig. 6 shows a possible processor architecture for use in the system.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for processing an image of a scene captured by a camera of an augmented reality device. An occluded real-world object and an occluding real-world object are identified in the scene, wherein at least a region of the occluded object is occluded, i.e. covered, by the occluding object. A representation of the occluded object including the region that is covered by the occluding object is rendered, by using information additional to the image data from which the appearance of the region of the occluded object is derived. A representation of the occluding object is rendered with at least semi-transparency at least at a portion where it occludes the region of the occluded object.

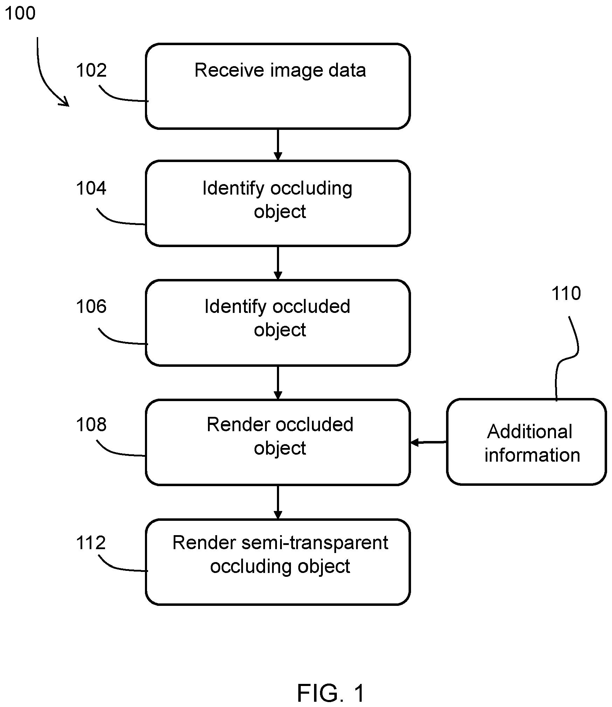

Fig. 1 shows the general steps of a method 100 of processing an image of a scene captured by a camera of an augmented reality device. The image comprises image data for real-world objects in the scene.

In step 102, the image data is received in real-time from the camera.

In step 104, an occluding object is detected and in step 106 an occluded object is detected in the scene. This may be performed by image segmentation algorithms. Alternatively, depth segmentation or so called instance segmentation based on an object class specific neural network can be used. Alternatively, all three above methods may be combined. At least a region of the occluded object (e.g. a component of a workpiece that the user is working on) is occluded, i.e. covered, by the occluding object (e.g. the user's hand or a tool).

In step 108, a representation of the occluded object is rendered, but including the region that is occluded by the occluding object. This region does not have any image data from the image frame being processed, since it is occluded by the occluding object. Thus additional information 110 to the image data of the currently processed image is used. The appearance of the region of the occluded object is derived from this additional information. Examples of this additional information are explained below in the more detailed examples.

In step 112, a representation of the occluding object is rendered with at least semi-transparency (i.e. semi-transparent or even fully transparent) at least at a portion where it occludes the region of the occluded object.

Thus, in the rendered image the user can "see through" the occluding object, for example their hand.

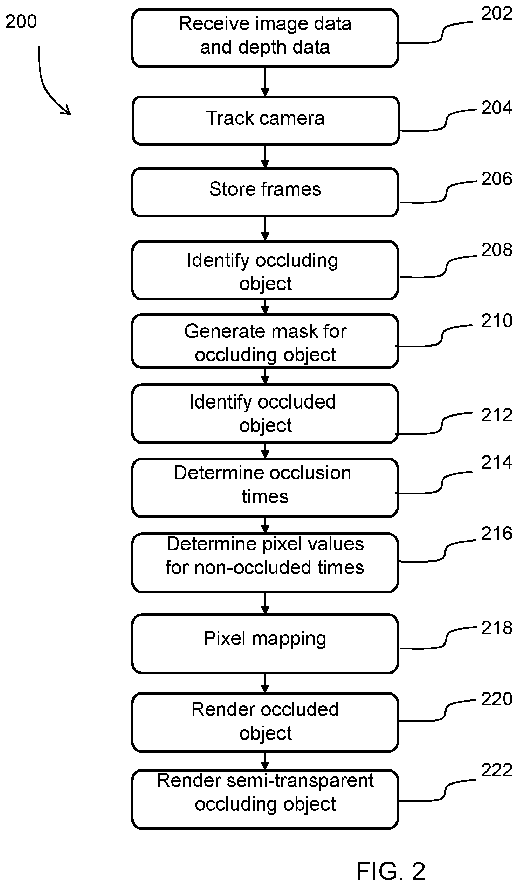

Fig. 2 shows a first example of the method 200 in more detail.

The image data is received in step 202. Furthermore, depth data is also obtained, i.e. depth-map data. The device of the user is thus a device that contains both a color camera and a depth sensor. The device can for example be worn on the forehead, mounted to glasses, as a collar or on the torso. To prevent occlusion of the camera by other objects and for the optimum viewpoint, there is a benefit of having the device as close as possible to the user's eyes.

For each moment in time, a depth-map is obtained in the color image coordinate system by warping the depth-map from its depth coordinate system into the color image coordinate system. Holes in the depth-map are then filled based on color similarity. The method assumes that the occluded object was initially (partially) non-occluded.

In step 204 the location and orientation of the camera is tracked. In this way, it is possible to map pixels of different frames with respect to each other. In other words, a mapping between the pixels of the captured images and the points of the scene in the field of view is possible. Thus, the incremental position/orientation change of the camera is tracked.

In step 206, the image and depth-map data for the current frame are stored in a temporal buffer.

In step 208 the occluding object is identified, as explained with reference to Fig. 1.

A binary mask for the occluding object can then be formed in step 210 based on the color image and the depth map. The mask will change shape over time (e.g. if the user changes their hand shape or position). However, it indicates the pixels which need to be processed to find pixel values based on the additional information.

The extent of the foreground mask can be cut off for pixels that lie further than a given distance from the area of interest. For example, to correctly render an object hidden behind a hand, the entire arm does not need to be processed, only points that lie e.g., within 10 cm from the center point of the hand need to be analyzed.

In step 212 the occluded object is identified.

In step 214, for the area of the mask, the depth-map of the current frame is compared with the depth-maps in the temporal buffer (for previous frames) and in this way the points in time during which a current pixel being processed was occluded by the occluding object can be determined. The event of a background pixel or group of pixels becoming occluded by the occluding object over time may be marked in the data.

In step 216, the color value for the current pixel being processed is retrieved just before the pixel was occluded. This pixel color information is thus derived from a previous frame.

In step 218, a pixel mapping takes place. The change in position and orientation due to camera movement (obtained by tracking is step 204) is applied between the time when the pixel color is retrieved to the current frame time. In this way, the correct pixel within the current frame image is obtained to correspond to the previously non-occluded pixel (i.e. the corresponding to the same location of the scene, which was non-occluded in the previous frame),

In step 220, the occluded object is rendered, by assigning the color value to the target pixel, and repeating this for all pixels of the occluded object.

There may be pixels of the (occluded) object that have not been visible at the time the object was not occluded. It could for example be that a screw is (partly) occluded by the device. Even with the user's hand removed, these pixels will remain unknown so that they need to be estimated.

In step 222, the occluding object is rendered with semi-transparency as explained above with reference to Fig. 1.

The semi-transparency may be applied locally. This relieves the segmentation algorithm for the occluding object from the task of performing an accurate segmentation. It also limits the spatial extent for which the occluded object's depth and texture needs to be synthesized using historical data. One solution is to create a semi-transparent hole at the position where the occluding object, or a region of interest of the occluded object, is positioned.

To accurately position a semi-transparent region of the occluding object, the motion of the tip of a tool may be tracked in 3D based on the depth map and image properties until it stops. Temporal images and depth maps of the still non-occluded object are kept in the temporal buffer as explained above. As an example, the screwdriver tip will stop at the screw head and once that location is known in 3D, the semi-transparent area can be positioned exactly over the screw head.

The example of Fig. 2 maps pixel colors from previous frames during which locations of the occluded object were visible to a current frame during which those locations are occluded. Thus, the additional information of Fig. 1 comprises historical image (and depth) data which may be used to reconstruct the appearance of the occluded object.

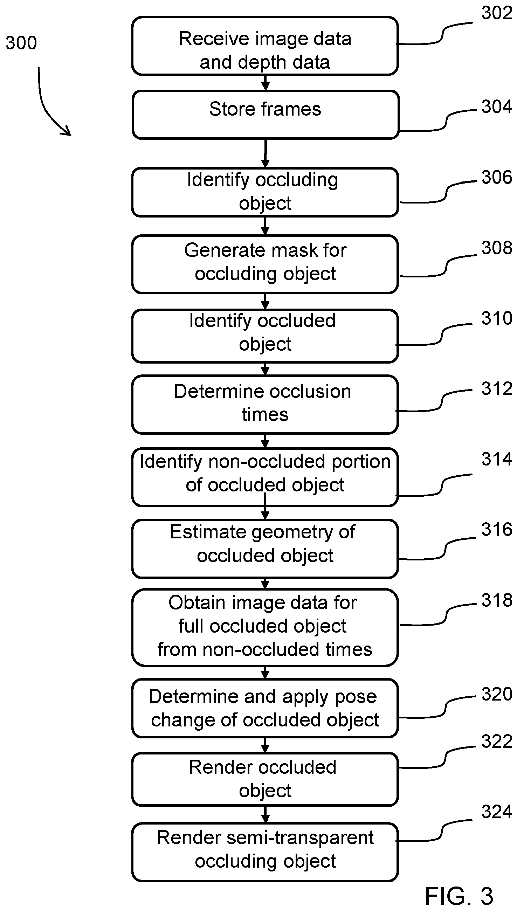

Fig. 3 shows another approach (which may be used separately or in combination with the approach of Fig. 2). It is based on reconstructing an image of the object of interest by tracking its movement, and by detecting non-occluded portions of the object in the current frame. The occluded portions can then be extrapolated from the non-occluded portions again using historical image (and depth) data.

Fig. 3 thus shows a second example of the method 300 in more detail.

The image data is received in step 302 and again depth data is also obtained.

In step 304, the image and depth map data for the current frame are stored in a temporal buffer.

In step 306 the occluding object is identified, as explained with reference to Fig. 1.

A binary mask for the occluding object can then be formed in step 308 based on the color image and the depth map.

In step 310 the occluded object is identified.

As described above, in step 312, for the area of the mask, the depth map of the current frame is compared with the depth maps in the temporal buffer (for previous frames) and in this way the points in time where the current pixel was occluded by the occluding object can be determined.

The method then deviates from the method of Fig. 2.

The non-occluded parts of the image are used to identify the occluded object, for example the still non-occluded parts of the image are searched for pixels with similar color/depth pixels to each other, so that they represent an incomplete portion of a partially occluded object.

If the pixel statistics are sufficiently similar, pixels are classified as non-occluded parts of an occluded object.

In step 316, the 3D geometry of the non-occluded part of the object is estimated using the input depth map.

A search back in the temporal buffer is then carried out in step 318 for a more fully non-occluded view of the object.

In step 320 a pose-change over time is derived from the historical data to the current time, assuming a rigid object transformation.

In step 320 the pose-change is also applied to a previous image of the non-occluded object to render a plausible visualization of the now occluded object.

The representation of the occluded object is then rendered in step 322 and the semi-transparent rendering of the occluding object takes place in step 324.

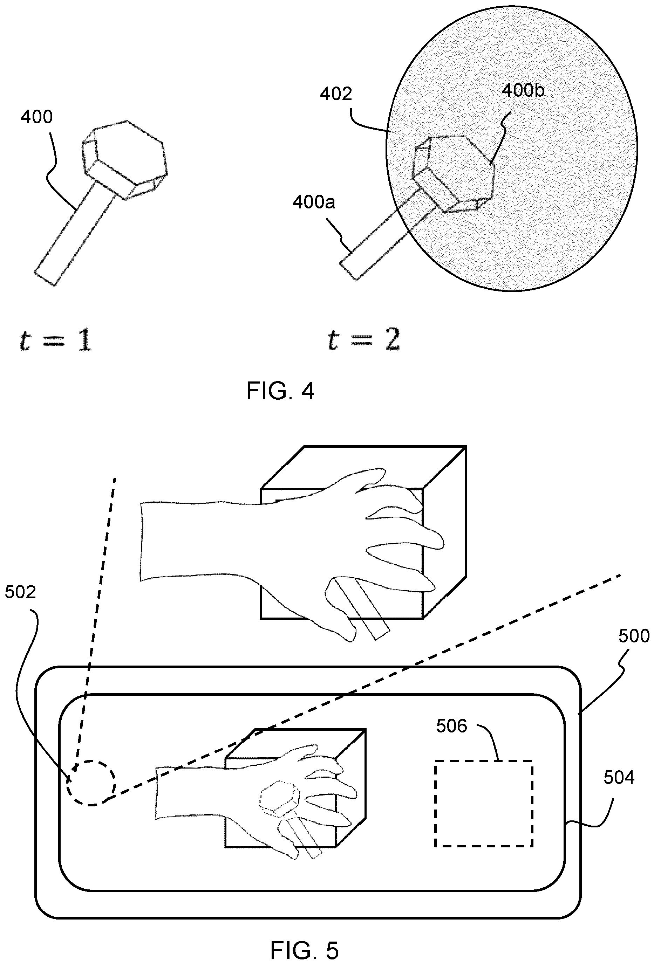

Fig. 4 shows a whole object 400 in the left image, and shows the object with a different pose in the right image, and partially occluded by an occluding object 402. The occluded object has a non-occluded part 400a and an occluded part 400b. The method of Fig. 3 determines the pose from the part 400a and then extrapolates the images of the occluded object 400 using the pose and position information which has been derived from the non-occluded part 400a,

It is desirable to compensate for 3D position and 3D orientation changes of the occluded object because during interaction, the hand/tool will modify the pose of the occluding object. For instance, a screwdriver will turn a screw. Using the color camera and depth sensor, the pose of the screwdriver can be estimated. Also, a known marker on the screwdriver can be used to estimate the pose. From the pose and the dimensions of the screwdriver the pose of the screw can be derived.

The methods may be extended to detect touch events between the occluding object and the occluded object. It can be useful to visualize touch events between the objects. This function can apply both the non-occluded part of an object and to the occluded part of an object. For the non-occluded part of the object, detecting the touch event and visualizing this event may be implemented by the following method:
(i) A mask for the occluding object is created based on thresholding the depth map. As a simple rule, depth pixels values less than a certain value, e.g., closer than 30cm from the depth sensor, are set to the occluding object. These pixels may then be tracked over time and may move further away from the camera. Hence, the mask for the occluding object is known for all moments in time.
(ii) A test is carried out for whether depth pixels outside the mask touch the boundary by comparing locally the depth values inside and outside the mask. If the depth difference is less than e.g. 1cm, a touch event is generated at that position. The threshold of 1cm depends also on the precision of the captured depth map. There is typically noise present in the depth map and hence pixels can be averaged locally inside and outside the mask to reduce noise. After noise reduction, the collision threshold may be lowered to e.g. 1mm.
(iii) The touch event is then illustrated, by showing the touch point in the 2D view using e.g., a circle shape or by an outline on the occluded object.

The method may be extended by providing additional content as part of the displayed image.

One example is to illustrate relationships between parts, relevant for assembly or disassembly. In some cases, physical parts need to be combined to form the resulting piece, and the user may not a-priori know which parts need to be attached to which other parts and possibly also in which order.

To solve this with a combined image and depth camera the following steps may be performed:
(i) Assuming that the parts are placed on a flat surface such as the ground or a table, a plane 3D surface model is fitted using the depth map as input.
(ii) The fitted surface is subtracted from the depth map to segment out individual parts.
(iii) The cropped images of the segmented parts are provided to an image recognition system.
(iv) A manual description is used to determine which parts must be linked together.
(v) The links between parts are rendered as an overlay on top of the captured image, for example as connecting lines of parts that must be connected together.

This approach may be extended also to derive an assembly order which can be rendered via an overlay of numbers on the image.

The invention addresses the problem of occlusion of real objects by removing the occlusion by an occluding object (e.g. a hand or tool), instead of re-introducing an occluded part to a virtual graphics object. The occluded object (which is the object of interest) may additionally be augmented with 3D graphics (e.g., providing annotation data) and hence not only the object but also the 3D annotations may be occluded when rendering the occluding object.

This makes it more difficult for the user to identify the pose (rotation/translation) of the object and to identify the correct pose (orientation and position) of the user's hands or a tool (such as a screwdriver or pliers) relative to the pose of the object. For the example (above) of a screw being rotated by a screwdriver, the user would normally change viewpoint (head translation) for better/un-occluded perception of the scene. But even then, since the hand or tool interacts with the object being manipulated, the occlusion problem still exists although the occluded region will likely decrease in size or at least change as a function of viewing pose. Also, for many use cases (e.g. manipulations in confined spaces), it is not always possible for the user to change viewpoint.

The problem of a hand or tool occluding an object that one interacts with, also exists in normal vision (without there being a display present). Normally this is solved by using our biological touch sensors in combination with our (muscle) memory of the exact shape and size of the object that we manipulate. However, it may be that for unfamiliar or small objects or when wearing gloves, touch sensors and memory provide less semantically meaningful information than an un-occluded view would have provided.

This problem becomes significantly relevant when the camera image is sent over the internet as a source for requesting remote assistance (from a person or computer). The remote assistant cannot use biological sensors or memory, sees the occluded view and will have difficulty providing optimal support throughout the process of the local user trying to perform the physical task. The invention could therefore also be of great value for remote instruction videos.

The examples above make use of historical image data (and depth data) to derive information about the occluded parts of the occluded object. Another option is to make use of multiple source view cameras so that different parts are occluded in different images or to use prior knowledge of the object class and/or geometry. Direct information about the occluded object may be obtained from a non-occluded part of the object. Indirect information may be obtained as a visible indication (e.g. measurement device output) indicative of the state of the occluded object.

A representation of the occluded object may be rendered even while it changes position or orientation, due to hand or tool actions, if the hand or tool actions are tracked and applied to the occluded object. For example, temporally changing hand and/or tool pose parameters may be obtained from a single, or multiple camera images and or sensed depth maps, and corresponding temporally changing pose parameters of the occluded object may be derived from those temporally changing hand/tools parameters.

Fig. 5 shows an augmented reality device 500 comprising a camera 502 for capturing images of a scene, a display 504 and a processor 506 for processing captured images and for rendering an image on the display. The processor is configured to implement the method described above.

In the example shown in Fig. 5, a real-world image of a hand holding a bolt in front of a cube is schematically shown, as well as the augmented reality image display on the display. A portion of the hand is rendered as semi-transparent to reveal the bolt-head through the hand.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

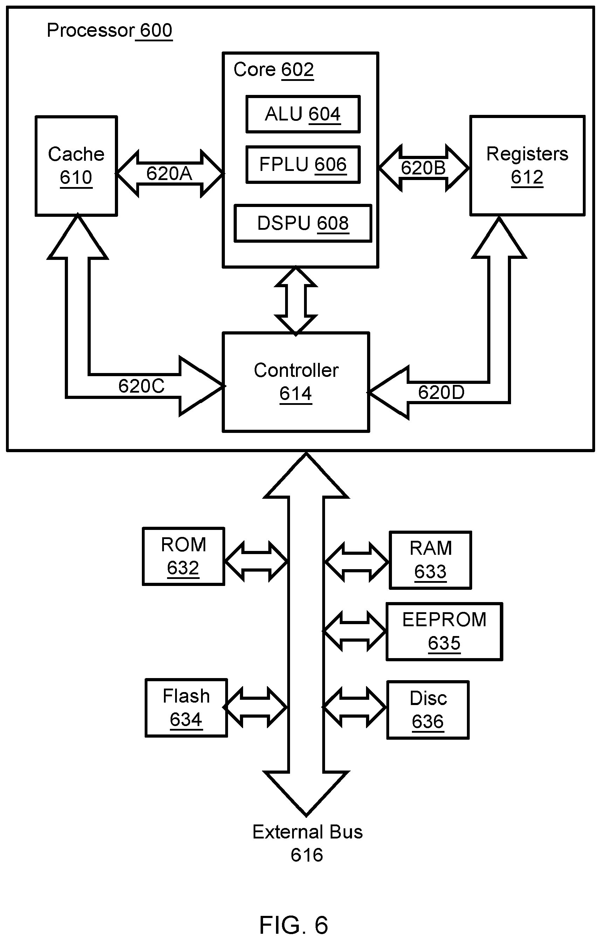

Fig. 6 is a block diagram illustrating an example processor 600 according to embodiments of the disclosure. Processor 600 may be used to implement one or more processors described herein, for example, processor 506 shown in Fig. 5. Processor 600 may be any suitable processor type including, but not limited to, a microprocessor, a microcontroller, a digital signal processor (DSP), a field programmable array (FPGA) where the FPGA has been programmed to form a processor, a graphical processing unit (GPU), an application specific circuit (ASIC) where the ASIC has been designed to form a processor, or a combination thereof.

The processor 600 may include one or more cores 602. The core 602 may include one or more arithmetic logic units (ALU) 604. In some embodiments, the core 602 may include a floating-point logic unit (FPLU) 606 and/or a digital signal processing unit (DSPU) 608 in addition to or instead of the ALU 604.

The processor 600 may include one or more registers 612 communicatively coupled to the core 602. The registers 612 may be implemented using dedicated logic gate circuits (e.g., flip-flops) and/or any memory technology. In some embodiments the registers 612 may be implemented using static memory. The register may provide data, instructions and addresses to the core 602.

In some embodiments, processor 600 may include one or more levels of cache memory 610 communicatively coupled to the core 602. The cache memory 610 may provide computer-readable instructions to the core 602 for execution. The cache memory 610 may provide data for processing by the core 602. In some embodiments, the computer-readable instructions may have been provided to the cache memory 610 by a local memory, for example, local memory attached to the external bus 616. The cache memory 610 may be implemented with any suitable cache memory type, for example, metal-oxide semiconductor (MOS) memory such as static random-access memory (SRAM), dynamic random-access memory (DRAM), and/or any other suitable memory technology.

The processor 600 may include a controller 614, which may control input to the processor 600 from other processors and/or components included in a system and/or outputs from the processor 600 to other processors and/or components included in the system. Controller 614 may control the data paths in the ALU 604, FPLU 606 and/or DSPU 608. Controller 614 may be implemented as one or more state machines, data paths and/or dedicated control logic. The gates of controller 614 may be implemented as standalone gates, FPGA, ASIC or any other suitable technology.

The registers 612 and the cache 610 may communicate with controller 614 and core 602 via internal connections 620A, 620B, 620C and 620D. Internal connections may implemented as a bus, multiplexor, crossbar switch, and/or any other suitable connection technology.

Inputs and outputs for the processor 600 may be provided via a bus 616, which may include one or more conductive lines. The bus 616 may be communicatively coupled to one or more components of processor 600, for example the controller 614, cache 610, and/or register 612. The bus 616 may be coupled to one or more components of the system.

The bus 616 may be coupled to one or more external memories. The external memories may include Read Only Memory (ROM) 632. ROM 632 may be a masked ROM, Electronically Programmable Read Only Memory (EPROM) or any other suitable technology. The external memory may include Random Access Memory (RAM) 633. RAM 633 may be a static RAM, battery backed up static RAM, Dynamic RAM (DRAM) or any other suitable technology. The external memory may include Electrically Erasable Programmable Read Only Memory (EEPROM) 635. The external memory may include Flash memory 634. The External memory may include a magnetic storage device such as disc 636.

A computer program carrier may comprise a relatively permanent storage device (e.g. hard drives, solid state drives etc.) and/or may comprise a temporary carrier (e.g. a bitstream etc.).

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method of processing an image of a scene captured by a camera of an augmented reality device, the image comprising image data for real-world objects in the scene, the method comprising:
(104) identifying an occluding object in the scene and (106) identifying an occluded object in the scene, wherein at least a region of the occluded object is occluded by the occluding object;
(108) rendering a representation of the occluded object including the region that is occluded by the occluding object, by using information (110) additional to the image data of the currently processed image from which the appearance of the region of the occluded object is derived; and
(112) rendering a representation of the occluding object with at least semi-transparency at least at a portion where it occludes the region of the occluded object.

2. The method of claim 1, wherein rendering a representation of the occluding object with at least semi-transparency is performed locally in a portion of the occluding object which is occluding the region of the occluded object.

3. The method of claim 1 or 2, wherein the additional information comprises one or both of:
historical image data; and
stored information for an identified occluded object.

4. The method of any one of claims 1 to 3, wherein the occluding object comprises a hand or a tool.

5. The method of any one of claims 1 to 4, wherein the occluding object comprises a tool and the method comprises detecting and tracking a tip of the tool.

6. The method of any one of claims 1 to 5, wherein identifying the occluding object and the occluded object is performed using the image-data and depth-map data.

7. The method of claim 6, comprising:
(206; 304) storing the image-data and the depth-map data overtime as frames;
(210; 308) generating a mask identifying the location in the image of the occluding object over time; and
(214; 312) using the depth-map data to identify times a selected pixel within the mask was occluding the occluded object.

8. The method of claim 7, further comprising:
(216) determining a pixel color for the selected pixel and for the occluded object from a previous frame before the selected pixel was occluded;
(220) applying the pixel color to the selected pixel of the current frame.

9. The method of claim 8, comprising:
(204) tracking a position and orientation of the camera over time; and
(218) translating the position of the determined pixel color to the current frame using the tracking information.

10. The method of any one of claims 7 to 9, further comprising:
(314) using the depth map data and image data to identify a non-occluded portion of the occluded object;
(316) estimating a geometry of the occluded object from the non-occluded portion;
(318) obtaining image data of the complete occluded object from a previous frame or frames;
(320) estimating a pose change of the occluded object between the previous frame or frames and the current frame; and
(320) applying the pose change to the image data of the complete occluded object and render the complete occluded object in the current frame.

11. The method of any one of claims 6 to 10, further comprising detecting a touch event and rendering an indication of the touch event.

12. The method of claim 11 comprising:
generating a mask identifying the location in the image of the occluding object over time; and
determining a touch event by comparing locally depth values inside and outside the mask to determine if a depth difference is below a threshold

13. The method of any one of claims 1 to 12, comprising:
identifying a set of parts in the image data, to be assembled; and
rendering a representation which illustrates associations between the parts based on an assembly manual.

14. A computer program comprising computer program code which is adapted, when said program is run on a computer, to implement the method of any one of claims 1 to 13.

15. An augmented reality device comprising:
a camera for capturing images of a scene;
a display; and
a processor for processing captured images and for rendering an image on the display,
wherein the processor is configured to implement the method of any one of claims 1 to 13.
